# EUROPEAN PATENT SPECIFICATION

(11) **EP 2 489 579 B1**
(45) Date of publication and mention of the grant of the patent: **30.03.2016**
(21) Application number: 10823261.2
(22) Date of filing: 08.09.2010
(51) Int. Cl.: B62D 55/08, B62D 55/00, B62D 55/253, B62D 55/096

(54) **CRAWLER TRAVEL UNIT**
RAUPENBEWEGUNGSEINHEIT
DISPOSITIF DE DÉPLACEMENT DE CHENILLE

(30) Priority: 13.10.2009 JP 2009236099; 31.05.2010 JP 2010124955
(43) Date of publication of application: 22.08.2012
(73) Proprietor: Kubota Corporation, Osaka-shi Osaka 556-8601 (JP)
(72) Inventor: ISHIHARA Kazuma, Sakai-shi Osaka 590-0823 (JP); INAOKA Motonari, Sakai-shi Osaka 590-0823 (JP); KOBAYASHI Takashi, Sakai-shi Osaka 590-0823 (JP)
(74) Representative: von Hirschhausen, Helge
(86) International application number: PCT/JP2010/065412
(87) International publication number: WO 2011/045993

(56) References cited:
- WO-A1-97/46441
- WO-A1-2004/062990
- GB-A- 1 217 090
- JP-A- 2003 081 144
- JP-A- 2008 168 876
- JP-A- 2009 078 796
- JP-U- H03 129 579
- JP-Y2- 2 543 716
- US-A- 5 399 003

## Description

### TECHNICAL FIELD OF THE INVENTION

The present invention relates to a crawler traveling apparatus comprising: a crawler belt, the crawler belt including a belt body made of a rubber material and cored bars embedded in the crawler belt at a predetermined pitch along a belt circumference direction; a drive sprocket for providing the crawler belt with a rotational drive force along the belt circumference direction; an idler wheel for guiding the inner circumference face of the crawler belt; and a track wheel. The crawler belt has a track wheel tracking face formed on a portion of an inner circumference face of the belt body located laterally outside the right/left cored bar projection of the crawler belt, for allowing rolling of the track wheel on the track wheel tracking face.

### BACKGROUND OF THE INVENTION

Patent Document 1 and Patent Document 2 respectively disclose a crawler traveling apparatus, wherein each cored bar has a right/left pair of track-wheel-guiding cored bar projections, each of the cored bar projections being projected from an intermediate portion of the cored bar in a belt width direction toward an inner circumference face of a crawler belt.

In the crawler apparatus according to Patent Document 1, an anti-run-off guide (crawler guide), having an upper receiver plate with a wide lateral width formed integrally therewith, is mounted to an upper portion of a guide portion which is formed elongate in the fore/aft direction in such a manner that the right and left ends of the anti-run-off guide project laterally from this guide portion. With this construction, when the crawler is pushed up when riding over a projection for example, the upper receiver plate having a wide lateral width comes into contact with the upper end of the cored bar projection, thus preventing the guide portion from coming into contact with the engaging portion of the cored bar. The pair of right and left cored bar projections of the crawler belt are formed integral with the body portion of the cored bar embedded within the crawler belt made of rubber, and only the cored bar projections alone project toward the inner circumference face of the crawler belt. When this crawler belt rides over a projection in a field and a push-up action from the lower side is applied to the crawler belt, if the cored bar projections are pushed up at a portion where the laterally wide upper receiver plate is present, the upper receiver plate comes into contact with the tops of the cored bar projections, thereby to restrict rising movement of the cored bar projections. As a result, it is possible to restrict significant change in the vertical positions of the crawler belt and the anti-run-off guide.

However, if the cored bar projections are pushed up forwardly of the portion where the laterally wide upper receiver plate is present, nothing restricts rising movement of the tops of the cored bar projections. Hence, the tops of the cored bar projections come into contact with the forward end edge of the upper receiver plate, so that a damage may occur in the cored bar projections and/or the upper receiver plate. Therefore, there is need for largely extending the laterally wide upper receiver plate of the anti-run-off guide side to a forward position where no push-up action is applied to the cored bar projections. Further, the upper receiver plate per se tends to be formed relatively heavy in order to ensure sufficient strength, and the anti-run-off guide tends to be formed heavy also.

In the crawler apparatus according to Patent Document 2, the pair of right and left cored bar projections are formed integral with the cored bars embedded within the rubber crawler belt. Normally, only the cored bar projections project toward the inner circumference face of the crawler belt. Therefore, the crawler portion located between the pair of right and left cored bar projections is formed as a layer having a relatively thin rubber layer for covering the inner peripheral face of the cored bar. As a result, when e.g. a push-up action from under is applied to the crawler belt, the lower edge of the anti-run-off guide located between the cored bar projections tends to come into sliding contact with the rubber layer covering the inner circumference face of the cored bar, so that this rubber layer may be damaged prematurely. Then, between the right and left cored bar projections, there will be formed a portion which comes into contact with the rubber layer of the crawler belt and a portion which, due to loss of the rubber layer, is exposed to direct contact with the cored bar made of metal. As a result, as the idler wheel made of metal rides over the cored bar which is also made of metal, there may be generated a large rumbling noise at this portion.

### LIST OF PRIOR ART

### Patent Documents

Patent Document 1: Japanese Registered Utility Model No. 2543716 [JP 2543716 Y (corresponding to JP 3-129579 U)] (page 2, columns 4-5; Fig. 1 and Fig. 2); and
Patent Document 2: Japanese Unexamined Patent Application Publication No. 2003-081144 [JP 2003-081144 A] (paragraph [0032]; Fig. 1, Fig. 4, Fig. 5 and Fig. 6)

A further crawler apparatus in known from WO 9746441.

### SUMMARY OF THE INVENTION

### Object to be Achieved by Invention

The object of the present invention is to provide a crawler traveling apparatus causing less traveling noise by effectively restricting direct contact between an outer circumference of an idler wheel made of metal and cored bars made of metal.

### Means for Achieving the Object

The above object is fulfilled according to one aspect of a crawler traveling apparatus according to the present invention, as under:-

A crawler traveling apparatus comprising:
a crawler belt, the crawler belt including a belt body made of a rubber material and cored bars embedded in the crawler belt at a predetermined pitch along a belt circumference direction, each of the cored bars having a right/left pair of track-wheel-guiding cored bar projections, each of the cored bar projections being projected from an intermediate portion of the cored bar in a belt width direction toward an inner circumference face of the crawler belt;
a drive sprocket for providing the crawler belt with a rotational drive force along the belt circumference direction;
an idler wheel for guiding the inner circumference face of the crawler belt; and
a track wheel;
the crawler belt having a track wheel tracking face formed on a portion of an inner circumference face of the belt body located laterally outside the right/left cored bar projection of the crawler belt, for allowing rolling of the track wheel on the track wheel tracking face;
wherein an anti-run-off guide is provided between the right/left pair of the cored bar projections for preventing run-off of the crawler belt, and
wherein the anti-run-off guide has a proximity restricting portion (A) formed thereon, the proximity restricting portion (A) being configured to come into contact with the right/left cored bar projection to prevent a lower edge of the anti-run-off guide from coming into contact with the inner circumference face of the roller belt

With the above-described arrangement, since the proximity restricting portion is formed in the anti-run-off guide, sliding contact of the anti-run-off guide with the roller belt inner circumference face side can be avoided. Therefore, there occurs no damage to the rubber layer of the crawler belt inner circumference face due to sliding contact of the anti-run-off guide. As a result, direct contact between the metal idler wheel and the inner circumference face of the cored bar formed of metal is avoided and nose generation can be restricted.

According to one preferred embodiment of the present invention:-
the anti-run-off guide has a front end lower edge and a boat-shaped downwardly oriented face respectively formed on a lower face of a front portion thereof, the front end lower edge having a shape which rises up toward a forward side and the boat-shaped downwardly oriented face tapering toward a front end thereof and extends wider outwards toward a rear upper side;
the anti-run-off guide has an upwardly oriented face formed on an upper face of the front portion thereof, the upwardly oriented face including an upper edge having a shape which rises up rearward toward the rear side; and
wherein the upwardly oriented face has a roof-shape which tapers toward a front end thereof and extends wider outwards toward a rear lower side thereof

With the above-described arrangement, the boat-shaped downwardly oriented face present on the lower face side of the front portion of the anti-run-off guide serves to guide mud present on the forward side, thereby to restrict riding of the mud over the anti-run-off guide. Further, on the front face side of the front portion of the anti-run-off guide, due to the presence of the roof-shaped upwardly oriented face, any mud which has once ridden over the upwardly oriented face of the anti-run-off guide is caused to slip-drop as being guided rearward downwardly. As a result, accumulation of a large amount of mud on the upper face side of the front portion of the anti-run-off guide is avoided, and it is possible to avoid a great trouble of removing such mud. This is another advantage achieved by the above arrangement.

According to another preferred embodiment of the present invention, the anti-run-off guide has an upwardly open recessed space provided rearwardly of the portion thereof having the roof-shaped upwardly oriented face, and a mud drain hole formed in a bottom face of the recessed space, the mud drain hole being communicated with the recessed space.

With this arrangement, as the recessed space used for weight reduction is provided rearwardly of the roof-shaped upwardly oriented face, entry of mud into this recessed space can be restricted by the slip-drop action of the roof-shaped upwardly oriented face. Moreover, even when an amount of mud has entered the recessed space, thanks to the mud drain hole formed on the bottom face side of the recessed space, such entered mud can be discharged through the mud drain hole to some extent. Hence, accumulation of a great amount of mud can be readily avoided. Furthermore, between the lower face of the anti-run-off guide at the portion thereof forming the mud drain hole and the inner circumference face of the crawler belt, there is formed a gap which is larger than the gap between the lowermost end face of the anti-run-off guide and the inner circumference face of the crawler belt. As a result, it is possible to prevent the inner circumference face of the crawler belt coming too close to the exit side of the mud drain hole, so that the exit can be readily maintained under the open state, and discharge of mud can be smoothly effected.

According to still further preferred embodiment of the present invention, the anti-run-off guide is disposed such that the upwardly open recessed space is located at a position overlapped with the track wheel as seen from a lateral side of the crawler traveling apparatus.

With this arrangement, as the recessed space is located at a position overlapped with the track wheel as seen in the side view, an amount of mud which tends to move from the lateral side of the vehicle body toward the recessed space in the course of a turning operation of the crawler traveling apparatus is restricted to some extent by the presence of the track wheel, so that entry of the mud into the recessed space can be readily restricted. Further, even if mud has entered the recessed space, as its position is blocked by the track wheel in the side view, esthetic deterioration due to accumulated mud can be readily avoided.

According to still further preferred embodiment of the present invention:-
the crawler traveling apparatus further comprises a track frame,
wherein the anti-run-off guide includes an attaching portion for attachment thereof to the track frame; and
wherein the anti-run-off guide has an upwardly oriented face formed on an upper face of the front portion thereof, the upwardly oriented face including an upper edge having a shape which rises up rearward toward the rear side, a rear end of the upper edge being connected to the attaching portion.

With this arrangement, the upwardly oriented face having the rearwardly rising shape on the upper face side of the front portion of the anti-run-off guide can be effectively utilized as a reinforcing means for the anti-run-off guide. Namely, when a push-up force is applied to the anti-run-off guide from the forward downward side thereof when e.g. the crawler traveling apparatus rides over a projection in a field, there is the risk that this push-up force may cause deformation in the leading end side of the anti-run-off guide. However, since the upwardly oriented face having an upper edge having the rearwardly rising shape is utilized as a reinforcing means for the anti-run-off guide, there is provided the advantageous effect of restricting deformation of the leading end side of the anti-run-off guide against such push-up force.

According to the present invention:-
the drive sprocket includes driving pawl members; and the crawler belt has engaging recessed portions provided on an inner circumference face thereof for coming into engagement with the driving pawl members, each of the engaging recessed portions being located between a fore/aft pair of the cored bars in the belt circumference direction and formed elongate along the belt width direction, pressure receiving block portions formed of rubber being interposed between the respective fore/aft pair of the cored bars in the belt circumference direction; and
wherein the drive sprocket further includes a disc-shaped member having an outer circumference thereof fitted into a space between the right/left pair of the cored bar projections; and wherein the driving pawl members of the drive sprocket are configured to come into engagement with engaging recessed portions which are formed in the crawler belt with a predetermined interval on an outer circumference of the disc-shaped member.

With this arrangement, power transmission is possible with avoiding direct contact between the metal cored bars and the metal drive sprocket. Accordingly, at the portions of the crawler belt driven by the drive sprocket also, driving can be effected with less nose generation with avoiding contact between metal members.

According to still further preferred embodiment of the present invention, a fore/aft pair of pressure receiving block portions are provided across an outer circumference of the cored bar and project more inward of the crawler traveling apparatus than an inner peripheral face of the cored bar, to form a gap between an outer circumference edge of the idler wheel and the inner peripheral face of the cored bar, with the outer circumference edge of the idler wheel being contacted with an inner periphery of each of the pressure receiving block portions.

With this arrangement, even when coating on the inner circumference side of the cored bar is designed not to be removed by entrapped earth or small stone or not to cover the inner circumference side of the cored bar, it is possible to prevent the metal idler wheel forming coming into direct contact with this cored bar. Hence, there is achieved the advantage of avoiding noise generation due to contact between metal members.

### BRIEF DESCRIPTION OF THE DRAWINGS

Fig. 1 is an overall side view of a tractor,
Fig. 2 is an overall side view of a crawler traveling apparatus,
Fig. 3 is a plan view of a crawler belt,
Fig 4 is a view in section taken along a line IV-IV in Fig. 3,
Fig. 5 is an explanatory view illustrating a contact condition between an idler wheel and a crawler belt,
Fig. 6 is a partial cross sectional view showing the crawler belt along a belt circumference direction,
Fig. 7 is a schematic perspective view showing a vicinity of cored bar projections,
Fig. 8 is a perspective view showing a portion of a drive sprocket,
Fig. 9 shows an anti-run-off guide, with (a) being a plan view; and (b) being a side view,
Fig. 10 shows the anti-run-off guide, with (a) being a view as seen in arrows of line Xa-Xa in Fig. 9 (b); (b) being a view as seen in arrows of line Xb-Xb in Fig. 9 (b); (c) being a section view as seen in arrows of line Xc-Xc in Fig. 9 (b); and (d) being a section view as seen in arrows of line Xd-Xd in Fig. 9 (b),
Fig. 11 shows functional states of components related to the crawler belt, with (a) being an explanatory view illustrating relationship relative to the drive sprocket; (b) being an explanatory view illustrating relationship relative to the idler wheel; and (c) being an explanatory view illustrating relationship relative to the anti-run-off guide,
Fig. 12 shows proximity restricted states of the anti-run-off guide relative to the cored bar projections in the vicinity of an attaching portion of the anti-run-off guide, with (a) being an explanatory view of a reference posture; and (b) being an explanatory view of a maximum proximity posture,
Fig. 13 shows the proximity restricted states of the anti-run-off guide relative to the cored bar projections in the vicinity of a lowermost end face of the anti-run-off guide, with (a) being an explanatory view of the reference posture, (b) being an explanatory view of the maximum proximity posture,
Fig. 14 is a view in section corresponding to Fig. 4, showing a belt according to a further embodiment, and
Fig. 15 is a schematic perspective view corresponding to Fig. 7, showing the belt according to the further embodiment.

### EMBODIMENTS OF THE INVENTION

An embodiment of the present invention will be described next, with reference to the accompanying drawings.

### [General Construction of Tractor]

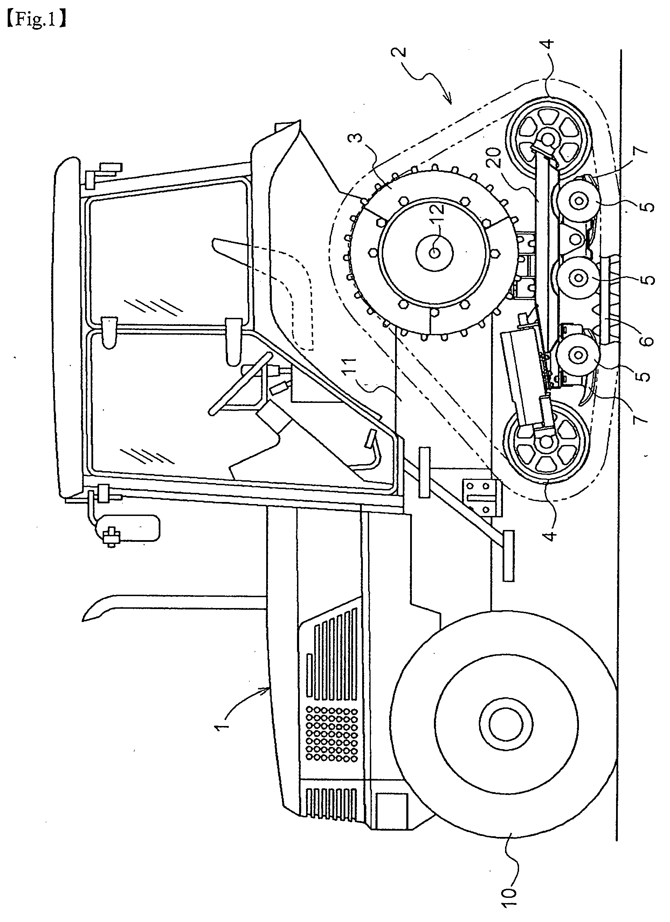

Fig. 1 shows a semi-crawler type tractor having a crawler traveling apparatus 2 according to the present invention mounted at a rear portion thereof. The semi-crawler type tractor is provided as a result of design change (specification change) of a four-wheel drive tractor into a semi-crawler type, and includes a pair of right and left steerable front wheels 10 mounted to front portions of a tractor vehicle body 1 with a cabin, and a pair of right and left crawler traveling apparatuses 2 as main propelling units mounted to rear portions of the vehicle body. Further, the tractor is configured so that the rear portion of the vehicle body may be coupled via an un-illustrated three-point link mechanism to a work implement, such as a tilling machine, a harvesting machine or other various kinds of intermediate management work implements.

### [Crawler Traveling Apparatus]

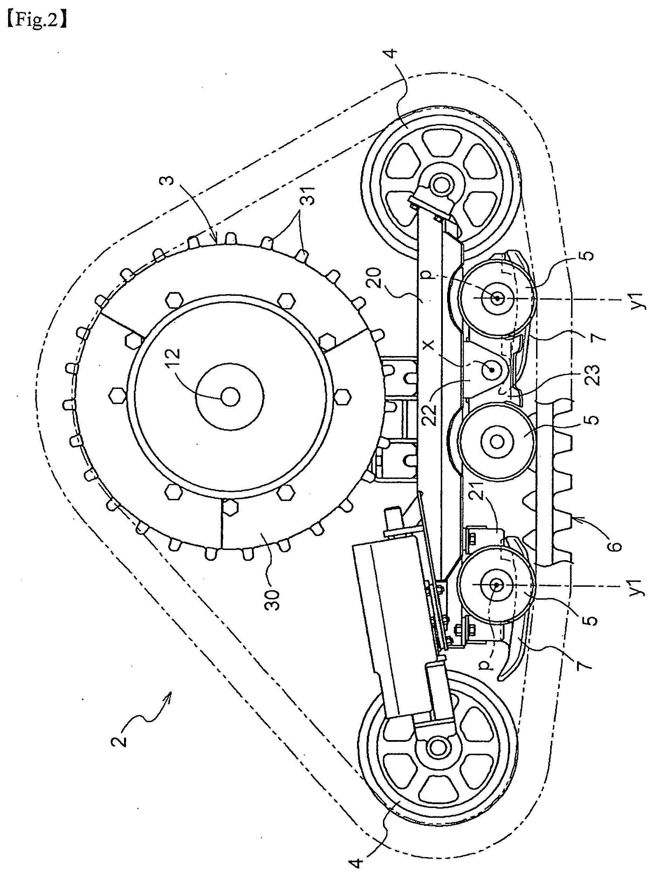

As shown in Fig. 1 and Fig. 2, each crawler traveling apparatus 2 includes a large-diameter drive sprocket 3 coupled to a rear axle 12 which is provided at a rear transmission case 11 in the tractor vehicle body 1 for rear wheel driving.

A crawler belt 6 is entrained around and across the above drive sprocket 3, idler wheels 4 mounted to front and rear portions of a track frame 20, and a plurality of track wheels 5 disposed side by side along a longitudinal direction of the track frame 20.

The right/left tread of this crawler traveling apparatus 2 is set to be substantially equal to the tread of the front wheel 10 for traveling between ridges in a field.

As shown in Fig. 2, as the track wheels 5, three of them are provided along the fore/aft direction. And, the most forward side track wheel 5 is fixed in position to the track frame 12 via a fixing bracket 21.

And, the rear side two track wheels 5, 5 are distributed on the opposed end sides of a balance-like member 23 whose intermediate portion is attached to be vertically pivotable about a lateral axis (x) relative to a support bracket 22 which is attached to the track frame 20, so that these two track wheels 5, 5 are pivotable in a see-saw manner.

In order to allow the respective track wheels 5 and the roller belt 6 to maintain a predetermined positional relationship in the belt width direction and also to prevent "run-off" or disengagement of the crawler belt 6 from the track wheels 5, anti-run-off guides 7 are provided at two, forward and rearward positions.

The forward side anti-run-off guide 7 is provided continuously from the lower end side of the fixing bracket 21 which fixedly supports the forward most track wheel 5, and the rear side anti-run-off guide 7 is provided continuously from the lower end side of the balance-like member 23 and extending between the fore and aft sides of the rearmost track wheel 5.

### [Crawler Belt]

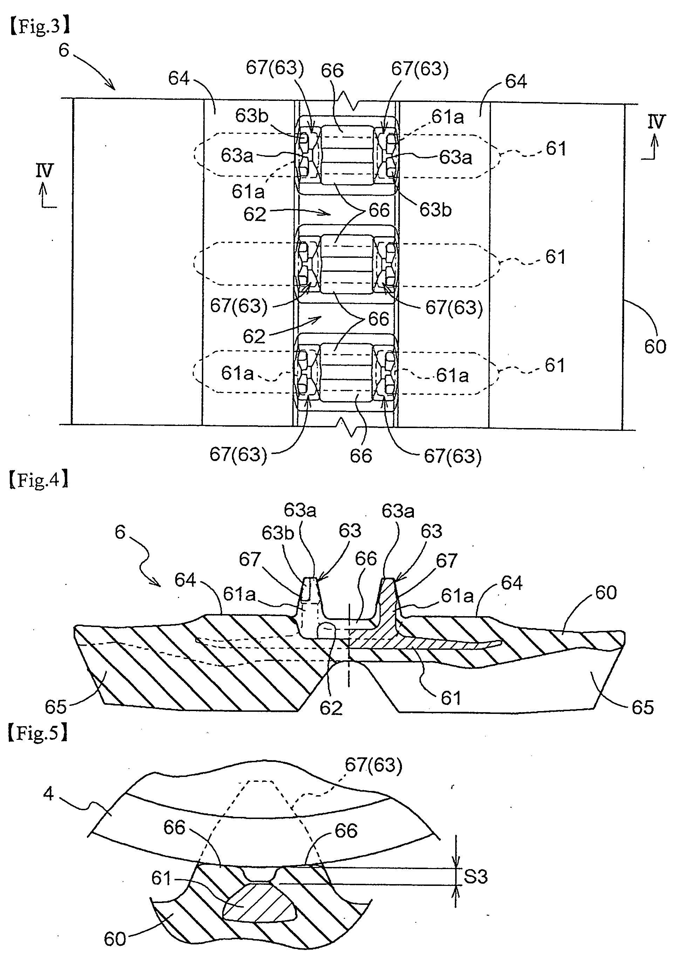

The crawler belt 6 is constructed as illustrated in Figs. 3 through 7.

The crawler belt 6 includes a belt body 60 formed of a rubber material in the endless shape; cored bars 61 embedded in the belt body 60 by a predetermined pitch along the belt circumference direction; and engaging recessed portions 62 formed between the respective cored bars 61 and on the belt inner circumference face side, so that driving pawl members 31 of the drive sprocket 3 may be engaged into the engaging recessed portions 62 for transmitting power to the crawler belt 6 side.

Each cored bar 61 includes a pair of right and left cored bar projections 63 projecting from a belt width-wise intermediate portion toward the belt inner circumference face side for guiding the track wheel, so that the drive sprocket 3 and the front and rear idler wheels 4, 4 pass between these cored bar projections 63.

Further, flat track wheel tracking faces 64 are formed on the inner circumference face of the belt body 60 located laterally outward of each cored bar 63, so that the track wheels 5 roll and move on flat track wheel tracking faces 64. And, propelling lugs 65, each having a greater thickness than the thickness of the belt body 60 except for the cored bar projection 63 portion thereof, are formed on the outer circumference face of the belt body 60 as integral projections from the belt body 60, at positions along the belt circumference direction overlapped with the respective engaging recessed portions 62 on opposite sides (inner/outer circumference faces) of the belt body 60..

Between the cored bar 61 and the engaging recessed portion 62 and on the inner circumference face side of the belt body 60, there is provided a pressure receiving block portion 66 for transmitting, to the cored bar 61, the drive force of the driving pawl member 31 of the drive sprocket 3 engaged within the engaging recessed portion 62. That is, as the pressure receiving block portion 66 made of rubber receives a compressive action from the metal driving pawl member 31 engaged in the engaging recessed portion 62, the driving force is transmitted to the cored bar 61. Thus, with avoiding direct contact between the metals of the driving pawl portion 31 and the cored bar 61, noise generation can be avoided.

Further, as shown in Fig. 5, the pressure receiving block portion 66 is configured to project more toward the belt inner circumference face side than the inner circumference face of the cored bar 61, so as to form, between the outer circumference face of the idler wheel 4 and the inner circumference face of the cored bar 61, a predetermined gap S3 for avoiding direct contact between the idler wheel 4 and the cored bar 61, when the idler wheel 4 is placed in contact with the inner circumference face side of this pressure receiving block portion 66.

Regarding the cored bar projection 63, as shown in Figs. 4 through 7, a metal projecting portion 61a is formed integrally with a portion of the cored bar 61 and projects toward the belt inner circumference face side, and as this projecting portion 61a is covered with a chevron-shaped projecting portion 67 made of a rubber material constituting the belt body 60, the cored bar projection 63 is formed substantially in a chevron shape.

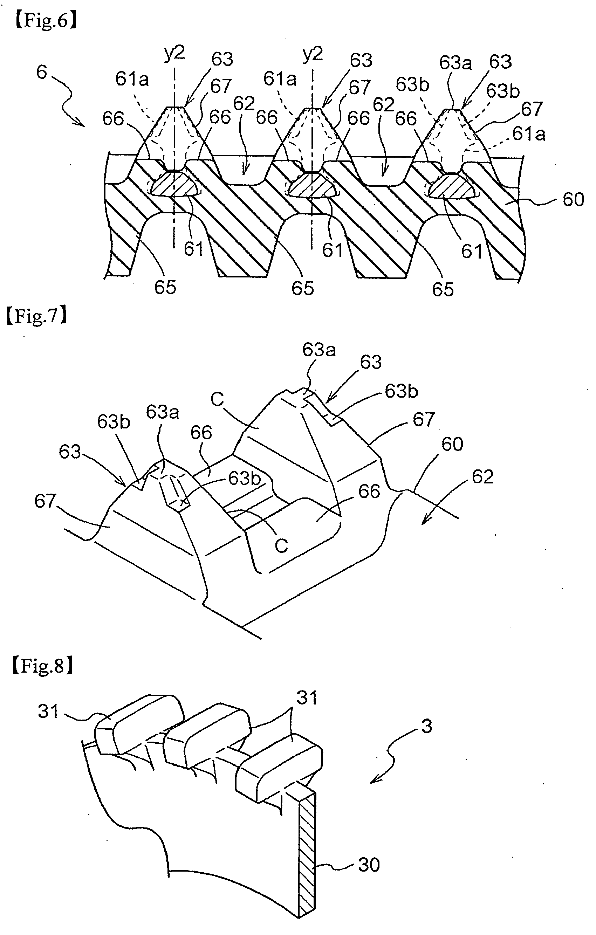

That is, the cored bar projection 63, has a chevron shape as viewed in cross section, both in the belt width direction shown in Fig. 4 as well as in the belt circumference direction shown in Fig. 6. And, as shown in Fig. 7, a face of the cored bar projection 63 facing the inner side in the belt width direction is formed of an inclined face acting as a guide face C for the idler wheel 4 or the anti-run-off guide 7.

Further, in this chevron-shaped cored bar projection 63, its top portion 63a has a T-shape as seen in the plan view, with a line extending along the belt circumference direction and a line extending normal thereto toward the outer side, and also a recessed portion 63b is provided at a portion in the guide face C of the chevron-shaped projecting portion 67 located on the outer side in the belt width direction adjacent the top portion 63a.

### [Drive Sprocket]

The drive sprocket 3 is constructed as shown in Fig. 2 and Fig. 8.

That is, the drive sprocket 3 includes the large-diameter disc-shaped member 30 coupled to the rear axle 12 and the driving pawl members 31 projecting radially outward from the outer circumference edge of the disc-shaped member 30.

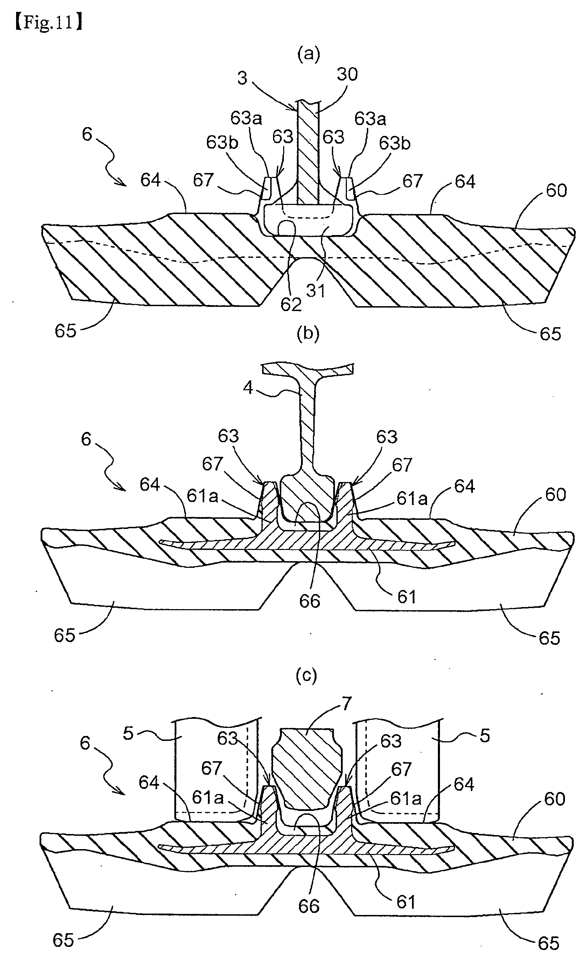

This driving pawl member 31, as shown in Fig. 8 and Fig. 11(a), projects laterally relative to the plate face of the disc-shaped member 30, thus having a lateral width substantially same as the length of the engaging recessed portion 62 in the lateral width direction of the belt and formed with a length substantially same as the length extending between both of the right and left cored bar projections 63.

The thickness of the disc-shaped member 30 along the belt lateral width direction is smaller than the opposing distance between the pair of right and left cored bar projections 63, so that this disc-shaped member 30 is rotatably driven as being engaged and fitted between the right and left cored bar projections 63, 63.

### [Anti-Run-Off Guide]

The anti-run-off guide 7 is configured as shown in Fig. 2 and Figs. 9-13.

That is, each of the front and rear anti-run-off guides 7 is constructed similarly, such that the anti-run-off guide 7 is fixedly connected to the fixing bracket 21 provided continuously from the track frame 20 or the balance-like member 23 provided continuously from the support bracket 22, to be disposed between the right and left cored bar projections 63, 63, at the position where the front-most track wheel 5 or the rear-most track wheel 5 is provided.

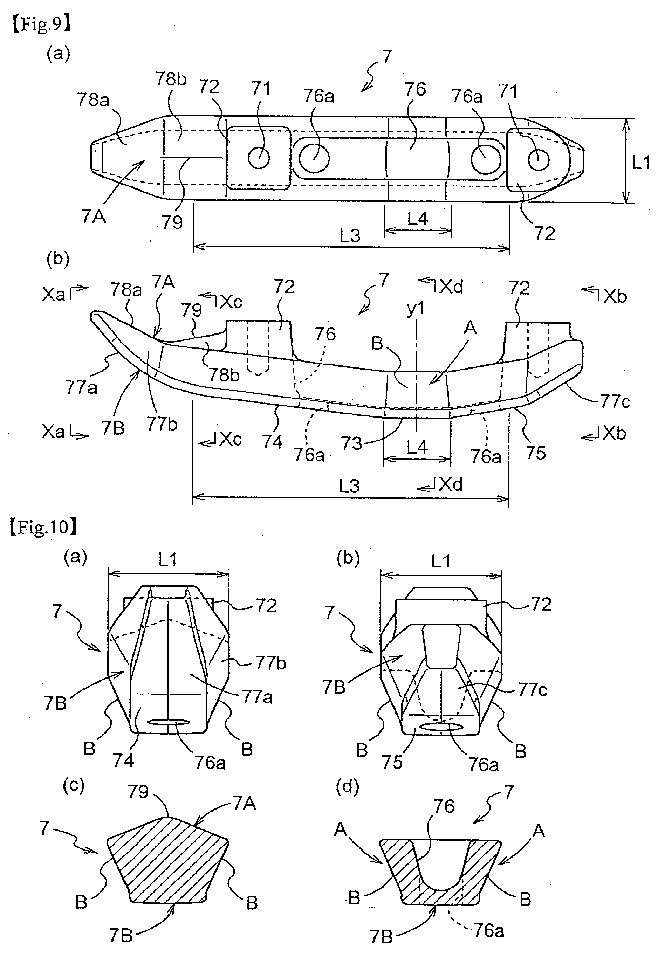

This anti-run-off guide 7 as a whole, as shown in Fig. 9, is boat-shaped as seen in the side view and at two, front and rear portions thereof, there are provided attaching portions 72, 72 having connecting/fixing screw holes 71, 71 for the fixing bracket 21 or the balance-like member 23 provided continuously from the support bracket 22.

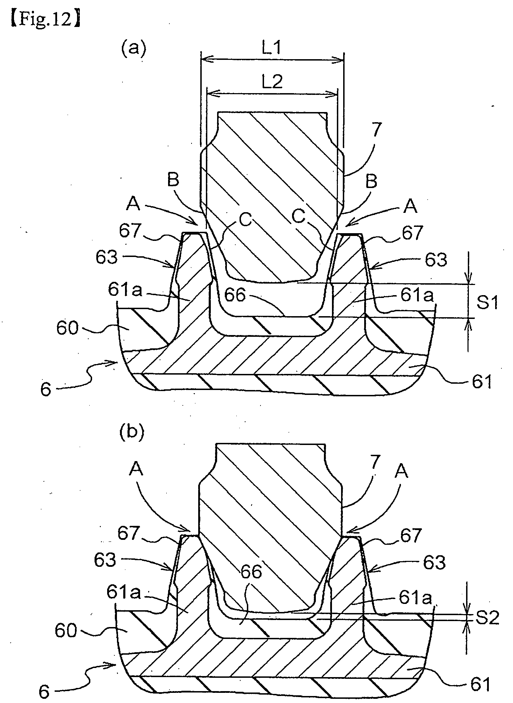

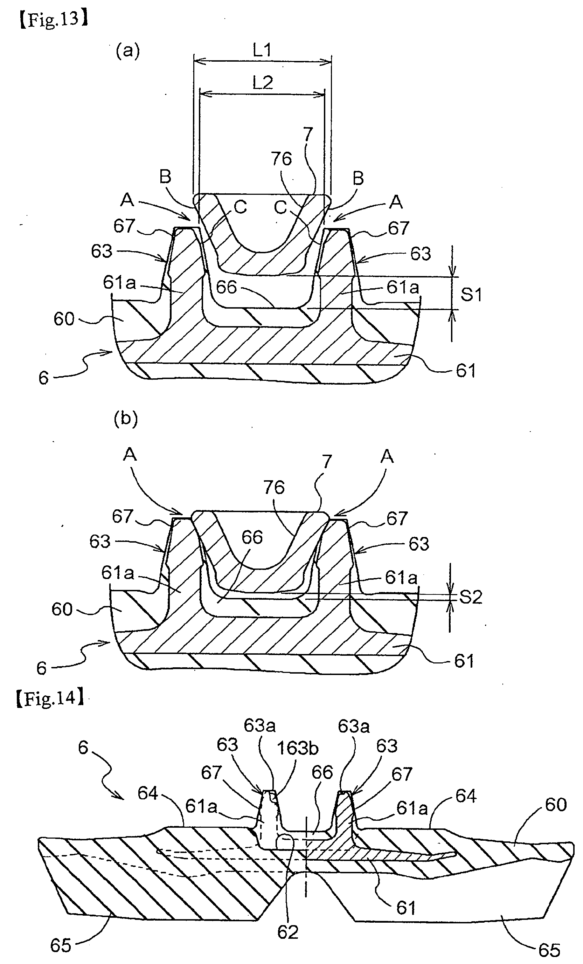

The position of the lowermost end of the anti-run-off guide 7 as being attached to the fixing bracket 21 or the balance-like member 23 is the position intersecting the normal line (y1) from the rotational center (p) of the track wheel 5, as shown in Fig. 2 and Fig. 9(b). This lowermost end position of the anti-run-off guide 7 is most adjacent to the inner circumference face of the crawler belt 6 between the right and left cored bar projections 63, 63. In this connection, a width (L1) between lateral faces B of the anti-run-off guide 7, which lateral faces B come into contact with the crawler belt 6 in the belt width direction at respective positions intersecting the normal line (y1), is set greater than a lateral width (L2) between portions of the crawler belt 6, which portions come into contact with respective upper portions of the cored bar projection 63 where a centerline (y2) of the cored bar projection 63 in the belt circumference direction is present (see Fig. 12 and Fig. 13).

As shown in Fig. 9 (a) and Fig. 9 (b), the width (L1) between the lateral faces (B) which constitute the contacting portions of the anti-run-off guide 7 in the belt lateral width direction, is configured to be constant over the length range of a straight portion L3 of the anti-run-off guide 7 in the belt circumference direction (fore-aft direction). Whereas, as shown in Fig. 9(a), on the forward side and the rearward side of this straight portion L3, the forward and rearward ends of the anti-run-off guide 7 are tapered as seen in the plan view; and as shown in Fig. 9 (b), formed with an upward warp at the forward and rearward ends thereof.

Further, as shown in Fig. 9 (b), a perpendicular lower edge area L4 is formed in the proximity of the portion of the straight portion L3 of the anti-run-off guide 7 intersecting the normal line (y1); and a perpendicular lower edge portion 73 (corresponding to the lowermost end face) perpendicular to the normal line (y1) is present in the perpendicular lower edge area L4. And, a front lower edge portion 74 of the straight portion L3 located forwardly of the perpendicular lower edge area L4 is slightly warped forwardly upward, whereas a rear lower edge portion 75 of the straight portion L3 located rearwardly of the perpendicular lower edge area L4 is slightly warped rearwardly upward.

The above-described lower edge shape of the anti-run-off guide 7 is provided for the following reason. Namely, as shown in Fig 2, assuming a situation where all of the track wheels 5 are positioned on a flat ground surface, lower edges of the respective front/rear idler wheels 4, 4 of the crawler traveling device 2 are located higher than a lower tangent line to all these track wheels 5. Therefore, the crawler belt 6 is entrained under tension as being slightly forwardly upwards on the front side of the forefront track wheel 5 and is entrained under tension as being slightly rearwardly upwards on the rear side of the rearmost track wheel 5, whereby a required spacing is maintained between the lower edge of the anti-run-off guide 7 and the inner circumference face of the crawler belt 6.

As shown in Fig. 9 (a) and Fig. 9 (b), the anti-run-off guide 7 has an upwardly open recessed space 76 formed, as a cast hole, between the front side attaching portion 72 and the rear side attaching portion 72. The recessed space 76 is provided for realizing reduction in the amount of material forming the anti-run-off guide 7, thus realizing reduction in the total weight thereof. So, this space 76 is formed as large as possible, as long as the formation thereof does not impair the required strength of the anti-run-off guide 7.

As shown in Fig. 9 (b), the recessed space 76 of the anti-run-off guide 7 is formed between the front and rear attaching portions 72, 72, with the normal line (y1) from the rotational center (p) of the track wheel 5 being located substantially at the fore/aft center of the front and rear attaching portions 72, 72. In addition, as shown in Fig. 2, the anti-run-off guide 7 is mounted to the track frame 20, with a positional relationship that as seen in the side view, the recessed space 76 is overlapped with the track wheel 5 lying between the front and rear attaching portions 72 of the anti-run-off guide 7.

The recessed space 76 has mud drain holes 76a formed in communication therewith and on the bottom side thereof at positions spaced forwardly and rearwardly from the perpendicular lower edge area L4 where the perpendicular lower edge portion 73 (corresponding to the lowermost end face) is present, there are formed.

The mud drain holes 76a formed at the above-described positions are configured such that, even if the perpendicular lower edge portion 73 (corresponding to the lowermost end face) comes into contact with the inner circumference face of the crawler belt 6, the holes 76a are slightly afloat or upwardly off of the inner circumference face of the crawler belt 6, so that exit sides of the respective mud drain holes 76a are not blocked by the inner circumference face of the crawler belt 6.

In reality, presence of a proximity restricting portion A of the anti-run-off guide 7, which will be described later, prevents the perpendicular lower edge portion 73 (corresponding to the lowermost end face) from coming into contact with the inner circumference face of the crawler belt 6. Hence, even wider spacing is maintained from the exit sides of the respective mud drain holes 76a to the inner circumference face of the crawler belt 6.

Further, the anti-run-off guide 7 is formed as shown in Fig. 9 (a), Fig. 9 (b) and Fig. 10 (a) through Fig. 10 (d).

That is, as shown in Fig. 9 (b), a downwardly oriented face 7B of the anti-run-off guide 7 on the forward side of the front attaching portion 72 is comprised of a front end lower edge 77a having a shape which rises up to the forward side as seen in the side view, and a front end lateral face portion 77b of the lateral face B of this anti-run-off guide 7, which extends to the forward side beyond the straight portion L3. And, this front end lateral portion 77b extends wider (or flares) toward the rear upper side, so that the forwardly rising front end lower edge 77a and the front end lateral face portion 77b together form the boat-shaped downwardly oriented face 7B (see Fig. 10 (a) and Fig. 10 (c)).

Further, as shown in Fig. 9 (a) and Fig. 9 (b), the upwardly oriented face 7A of the anti-run-off guide 7 extending forwardly of the front attaching portion 72 includes a flat and rearwardly falling upper face 78a on the forefront end side thereof. And, an upper face 78b extending continuous from this rearwardly falling upper face 78a has a roof-shape, wherein an upper edge 79 of the upper face 78a rises up toward the rearward side as seen in the side view, and the upper face 78a tapers toward a front end thereof and extends wider outwards toward a rear lower side thereof (see Fig. 9 (a), Fig. 9 (b), Fig. 10 (a) and Fig. 10 (c)).

A rear end of the rearwardly rising upper edge 79 is formed integral with and continuous from the front face of the forward attaching portion 72 of the anti-run-off guide 7, thus serving to reinforce the front end side of the anti-run-off guide 7 against an external force applied from the downwardly oriented face 7B side of the anti-run-off guide 7.

And, on the downwardly oriented face 7B side of the anti-run-off guide 7, with the boat shape which extends wider rearwardly and upwardly, an amount of mud present on the front side is guided and discharged to the lateral side, and on the upwardly oriented face 7A side of the anti-run-off guide 7, with the roof-shaped face which extends wider rearwardly and downwardly, an amount of mud placed on this upwardly oriented face 7A is guided and caused to slip down off it.

The recessed space 76 is formed between the front side attaching portion 72 and the rear side attaching portion 72. As shown in Fig. 10 (c), the cross sectional shape at the position where this recessed space 76 is present is upwardly open V-shape. This cross sectional portion is the cross section taken at the position intersecting the normal line (y1) from the rotational center (p) of the track wheel 5.

On the rear side of this position where the recessed space 76 is present, the downwardly oriented face 7B of the anti-run-off guide 7 includes a rearwardly rising rear end lower edge 77c and has a tapered shape comprising an inclined face which extends wider rearwardly and upwardly and tapered toward the rear side.

The reason why the front end side and the rear end side of the anti-run-off guide 7 have the tapered shape in the plan view is to achieve smooth guiding action by the anti-run-off guide 7 which has the extended width L1 in the belt lateral width direction as described above. Further, as described hereinbefore, the reason why the front and rear ends of the anti-run-off guide 7 have the upwardly warped shape in side view in addition to the tapered shape in the plan view is to make it possible to prevent the warped-up front and rear ends from coming into direct contact with the crawler belt 6.

With the anti-run-off guide 7 configured as described above, the contact face of the track wheel 5 and the lower edge of the anti-run-off guide 7 are set in their relative height positions such that, as shown in Fig. 12 (a) and Fig. 13 (a), a sufficiently large gap S1 may be provided between the lowermost end position of the anti-run-off guide 7 and the inner circumference face of the crawler belt 6 under the reference posture (i.e. the traveling posture of the crawler traveling apparatus wherein all of the track wheels 5 contact the track wheel tracking face 64 thus receiving generally averaged pressure therefrom).

On the other hand, as shown in Fig. 12 (b) and Fig. 13 (b), partial compression or flexion occurs in the crawler belt 6, so that the anti-run-off guide 7 is positioned relatively closer to the inner circumference face of the crawler belt 6 under the maximum proximity posture (i.e. a traveling posture of the crawler traveling apparatus wherein a concentrated push-up force is applied from under one or some of the track wheels 5 e.g. when the crawler traveling apparatus is riding over a projection from the ground).

According to the present invention, however, as described hereinbefore, the lateral width L1 at the contacting portion of the anti-run-off guide 7 in the belt lateral width direction is set greater than the lateral width L2 at the contacting portion upwardly of the cored bar projection 63 of the crawler belt 6 side. Hence, as shown in Fig. 12 (b) and Fig. 13 (b), a spacing S2 can be secured such that at the time of mutual approaching between the anti-run-off guide 7 and the inner circumference face of the crawler belt 6, due to the contact between the contacting portion of the anti-run-off guide 7 and the contacting portion upwardly of the cored bar projection 63, further approaching therebetween is effectively prevented, so that the contact therebetween is avoided.

That is, the proximity restricting portion A is formed by the contacting portion over the area of the straight portion L3, where the lateral width L1 is set for the anti-run-off guide 7, for preventing the lower edge portions 73, 74, 75 of the anti-run-off guide 7 from coming into contact with the inner circumference face side of the crawler belt 6.

The above-described proximity restricting portion A of the anti-run-off guide 7 is constituted of the portions of the opposed lateral faces B, B having the downwardly tapered inclination of the anti-run-off guide 7 that come into contact with the contacting portions upwardly of the guiding faces C of the cored bar projection 63, and the inclination angle of the opposed lateral faces B, B is set as a tapering angle with a slightly greater angle than the tapering angle which forms the inclination of the guide faces C, C of the right and left cored bar projections 63.

Therefore, even when the anti-run-off guide 7 engages into between the right and left cored bar projections 63, 63, the contact area at the proximity restricting portion A is relatively small, so situation of strong engagement leading to not readily releasable seizure can be readily avoided.

### [Idler Wheel]

As shown in Fig. 2 and Fig. 11(b), the idler wheel 4, 4 is freely rotated as engaging into between the right and left cored bar projections 63, 63 and being placed in contact with the inner circumference face of the crawler belt 6.

In the course of the above, as the rotation occurs with the outer circumference face of the idler wheel 4, 4 being in contact with the inner circumference face side of the pressure receiving block portion 66 of the crawler belt 6, noise generation at this portion can be avoided.

And, although there is the possibility of the opposed lateral faces of the idler wheel 4, 4 coming into contact with the metal portions of the right and left cored bar projections 63, 63, since the idler wheel 4, 4 and the crawler belt 6 are being rotated with almost no relative movement therebetween at this portion, not much noise will be generated even if the metal portions come into contact with each other. Hence, noise generation can be restricted also at this portion.

### [Further Embodiment 1]

The anti-run-off guide 7 is not limited to the one described in the foregoing embodiment wherein on the bottom side of the upwardly open recessed space 76, there are formed the mud drain holes 76a at the positions distant in the fore/aft direction from the perpendicular lower edge area L4 where the perpendicular lower edge portion 73 (corresponding to the lowermost end face) is present. Instead, the mud drain hole(s) 76a can be provided at any desired area. For instance, the anti-run-off guide 7 may have one and only mud drain hole 76a formed to extend continuous over the entire bottom portion in the fore/aft direction in the recessed space 76.

Further, rather than providing such upwardly open recessed space 76, the anti-run-off guide 7 as a whole can be formed hollow.

### [Further Embodiment 2]

On the upwardly oriented face 7A side of the anti-run-off guide 7, the invention is not limited to the arrangement described in the foregoing embodiment in which the rearwardly downward flat upper face 78a is provided on the leading end side and in continuation therefrom, there is provided the upper face 78b having the rearwardly rising upper edge 79 extending from the leading end side of the anti-run-off guide 7. Instead, there may be provided an upper face 78b having a rearwardly rising upper edge 79 form the leading end side of the anti-run-off guide 7, thereby to form a roof shape having a tapered form on the front end side and extending wider toward the rear downward side.

Incidentally, the roof-shape provided in the upwardly oriented face 7 is not limited to the one described in the foregoing embodiment having the top portion having the inverse V-shaped cross section and the rearwardly rising upper edge 79 forming a sharp ridge line. Instead, for instance, it may be a trapezoidal shape having a slightly flat portion at the top portion of the cross sectional shape or a top portion having an arcuate top cross sectional shape. In short, any desired shape may be employed as long as it allows slipping-down of mud for restricting accumulation of mud on this upwardly oriented face 7A.

### [Further Embodiment 3]

As the anti-run-off guide 7, in the foregoing embodiment, there was shown the example thereof wherein the upwardly oriented face 7A is formed only at the end portion of the forward side in the traveling direction of the crawler traveling apparatus 2. The invention is not limited thereto. A roof-shaped upwardly oriented face 7A similar to the above-described upwardly oriented face 7A may be provided also at the end portion of the rearward side in the traveling direction of the crawler traveling apparatus 2. This arrangement is effective for prevention of mud accumulation in case the crawler belt 6 of the crawler traveling apparatus 2 is driven in reverse.

### [Further Embodiment 4]

As the proximity restricting portion A of the anti-run-off guide 7, in the foregoing embodiment, there was shown the example thereof wherein the opposed lateral faces B, B having the downwardly tapered inclination of the anti-run-off guide 7 are provided with the inclination angle set to have a slightly greater tapering angle than the tapering angle of the guide faces C, C inclination of the right and left cored bar projections 63. The invention is not limited thereto. Instead, the opposed lateral faces B, B having the downwardly tapered inclination of the anti-run-off guide 7 may be provided with the inclination angle set to be equal to the tapering angle of the guide faces C, C determined by the inclination of the right and left cored bar projections 63. With such equal angle setting, the area of the contacting portion can be increased thereby to allow reduction in the surface pressure per unit area. Hence, there is obtained an advantage of the degree of friction at the contacting portion being reduced.

### [Further Embodiment 5]

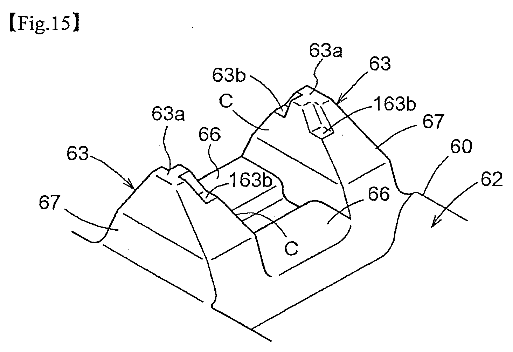

In the foregoing embodiment, as may be apparent from Fig. 4 or Fig. 6, the recessed portion 63b was provided on the outer side in the belt width direction adjacent the top portion 63 a, at a portion in the guide face C of the chevron-shaped projecting portion 67. Instead of this, as may be apparent from Fig. 14 or Fig. 15, this recessed portion 63b may be provided on the inner side in the belt width direction adjacent the top portion 63a.

### INDUSTRIAL APPLICABILITY OF THE INVENTION

The crawler traveling apparatus according to the present invention may be used as a propelling apparatus for not only a tractor described in the foregoing embodiment, but also for various vehicles such as a combine, a construction work machine, etc.

### DESCRIPTION OF REFERENCE MARKS/NUMERALS

- 2: crawler traveling apparatus
- 3: drive sprocket
- 4: idler wheel
- 5: track wheel
- 6: crawler belt
- 7: anti-run-off guide
- 7A: upwardly oriented face
- 7B: downwardly oriented face
- 20: track frame
- 60: belt body
- 61: cored bar
- 62: engaging recessed portion
- 63: cored bar projection
- 64: track wheel tracking face
- 72: attaching portion
- 76: recessed space
- 76a: mud drain hole
- 77a: front end lower edge
- 79: upper edge
- A: proximity restricting portion

## Claims

1. A crawler traveling apparatus (2) comprising:
a crawler belt (6), the crawler belt (6) including a belt body (60) made of a rubber material and cored bars (61) embedded in the crawler belt (6) at a predetermined pitch along a belt circumference direction, each of the cored bars (61) having a pair of right/left track-wheel-guiding cored bar projections (63), each of the cored bar projections (63) being projected from an intermediate portion of the cored bar (61) in a belt width direction toward an inner circumference face of the crawler belt (6);
a drive sprocket (3) for providing the crawler belt (6) with a rotational drive force along the belt circumference direction;
an idler wheel (4) for guiding the inner circumference face of the crawler belt (6); and
a track wheel (5);
the crawler belt (6) having a track wheel tracking face (64) formed on a portion of an inner circumference face of the belt body (60) located laterally outside the right/left cored bar projection (63) of the crawler belt (6), for allowing rolling of the track wheel (5) on the track wheel tracking face (64);
wherein an anti-run-off guide (7) is provided between the right/left pair of the cored bar projections (63) for preventing run-off of the crawler belt (6); and
wherein the anti-run-off guide (7) has a proximity restricting portion (A) formed thereon, the proximity restricting portion (A) being configured to come into contact with the right/left cored bar projections (63) to prevent a lower edge of the anti-run-off guide (7) from coming into contact with the inner circumference face of the roller belt (6),
**characterized in that** the drive sprocket (3) includes driving pawl members (31);
the crawler belt (6) has engaging recessed portions (62) provided on an inner circumference face thereof for coming into engagement with the driving pawl members (31), each of the engaging recessed portions (62) being located between a fore/aft pair of the cored bars (61) in the belt circumference direction and formed elongate along the belt width direction, and pressure receiving block portions (66) formed of rubber being interposed between the respective fore/aft pair of the cored bars (61) in the belt circumference direction;
wherein the drive sprocket (3) further includes a disc-shaped member (30) having an outer circumference thereof fitted into a space between the right/left pair of the cored bar projections (63), and wherein the driving pawl members (31) of the drive sprocket (3) are configured to come into engagement with the engaging recessed portions (62) which are formed in the crawler belt (6) with a predetermined interval on an outer circumference of the disc-shaped member (30).

2. A crawler traveling apparatus (2) according to any one of claims 1, wherein a fore/aft pair of pressure receiving block portions (66) are provided across an outer circumference of the cored bar (61) and project more inward of the crawler traveling apparatus (2) than an inner peripheral face of the cored bar (61), to form a gap between an outer circumference edge of the idler wheel (4) and the inner peripheral face of the cored bar (61), with the outer circumference edge of the idler wheel (4) being contacted with an inner periphery of each of the pressure receiving block portions (66).

3. A crawler traveling apparatus (2) according to claim 1 or 2, wherein
the anti-run-off guide (7) has a front end lower edge (77a) and a boat-shaped downwardly oriented face (7B) respectively formed on a lower face of a front portion thereof, the front end lower edge (77a) having a shape which rises up toward a forward side and the boat-shaped downwardly oriented face (7B) tapering toward a front end thereof and extends wider outwards toward a rear upper side; and
the anti-run-off guide (7) has an upwardly oriented face (7A) formed on an upper face of the front portion thereof, the upwardly oriented face (7A) including an upper edge (79) having a shape which rises up rearward toward the rear side, wherein the upwardly oriented face (7A) has a roof-shape which tapers toward a front end thereof and extends wider outwards toward a rear lower side thereof.

4. A crawler traveling apparatus (2) according to any one of claims 1 to 3, wherein the anti-run-off guide (7) has an upwardly open recessed space (76) provided rearwardly of the portion thereof having the roof-shaped upwardly oriented face, and a mud drain hole (76a) formed in a bottom face of the recessed space (76), the mud drain hole (76a) being communicated with the recessed space (76).

5. A crawler traveling apparatus (2) according to claim 4, wherein the anti-run-off guide (7) is disposed such that the upwardly open recessed space (76) is located at a position overlapped with the track wheel (5) as seen from a lateral side of the crawler traveling apparatus.

6. A crawler traveling apparatus (2) according to any one of claims 1-5, further comprising a track frame (20), wherein the anti-run-off guide (7) includes an attaching portion (72) for attachment thereof to the track frame (20); and
wherein the anti-run-off guide (7) has an upwardly oriented face (7A) formed on an upper face of the front portion thereof, the upwardly oriented face (7A) including an upper edge (79) having a shape which rises up rearward toward the rear side, a rear end of the upper edge (79) being connected to the attaching portion (72).

7. A crawler traveling apparatus (2) according to any one of claims 1-6, wherein the proximity restricting portion (A) of the anti-run-off guide (7) is constituted of portions of the opposed lateral faces (B, B) having a downwardly tapered inclination of the anti-run-off guide (7), that come into contact with contacting portions upwardly of guide faces (C, C) of the cored bar projections (63), and that the inclination angle of the opposed lateral faces (B, B) Is set as a tapering angle with a slightly greater angle than a tapering angle which forms the inclination of the guide faces (C, C) of the right and left cored bar projections (63).

## Patentansprüche

1. Raupenfahrgerät (2), aufweisend:
ein Raupenband (Gleiskettenband) (6), wobei das Raupenband (6) einen aus einem Gummimaterial hergestellten Bandkörper (60) und Einlagestäbe (61) beinhaltet, die in das Raupenband (6) bei vorbestimmtem Teilungsabstand entlang einer Umfangsrichtung des Bandes eingebettet sind, wobei jeder der Einlagestäbe (61) ein Paar aus rechtem/linkem zur Gleiskettenradführung dienenden Einlagestabvorsprung (63) aufweist, wobei jeder der Einlagestabvorsprünge (63) von einem mittleren Abschnitt des Einlagestabs (61) in Breitenrichtung des Bandes in Richtung zu einer Innenumfangsfläche des Raupenbandes (6) vorragt;
ein Antriebskettenrad (3), das dem Raupenband (6) eine Drehantriebskraft entlang der Umfangsrichtung des Bandes liefert;
ein Leitrad (4), das die Innenumfangsfläche des Raupenbandes (6) führt; und
ein Gleiskettenrad (5);
wobei das Raupenband (Gleiskettenband) (6) eine Gleiskettenrad-Spurführungsfläche (64) aufweist, die auf einem Abschnitt einer Innenumfangsfläche des Bandkörpers (60) ausgebildet ist, der sich seitlich außerhalb des rechten/linken Einlagestabvorsprungs (63) des Raupenbandes (6) befindet, um ein Abrollen des Gleiskettenrads (5) auf der Gleiskettenrad-Spurführungsfläche (64) zu ermöglichen;
wobei eine Anti-Entgleisungsführung (7) zwischen dem Rechts/Links-Paar der Einlagestabvorsprünge (63) vorgesehen ist, um ein Entgleisen des Raupenbandes (6) zu verhindern; und
wobei die Anti-Entgleisungsführung (7) einen auf ihr ausgebildeten Annäherungsbegrenzungsabschnitt (A) aufweist, wobei der Annäherungs-begrenzungsabschnitt (A) konfiguriert ist, um in Kontakt mit den rechten/linken Einlagestabvorsprüngen (63) zu kommen, um zu verhindern, dass eine untere Kante der Anti-Entgleisungsführung (7) in Kontakt mit der Innenumfangsfläche des Raupenbandes (6) kommt,
**dadurch gekennzeichnet, dass** das Antriebskettenrad (3) antreibende Klauenelemente (31) beinhaltet;
wobei das Raupenband (6) ausgesparte Eingreifabschnitte (62) aufweist, die auf dessen Innenumfangsfläche vorgesehen sind, um in Eingriff mit den antreibenden Klauenelementen (31) zu kommen, wobei jeder der vertieften Eingreifabschnitte (62) sich zwischen einem Vorne/Hinten-Paar der Einlagestäbe (61) in der Umfangsrichtung des Bandes befindet und länglich in Breitenrichtung des Bandes ausgebildet ist, und aus Gummi ausgebildete Druckaufnahme-Blockabschnitte (66) zwischen dem jeweiligen Vorne/Hinten-Paar der Einlagestäbe (61) in Umfangsrichtung des Bandes angeordnet sind;
wobei das Antriebskettenrad weiter ein scheibenförmiges Element (30) beinhaltet, dessen Außenumfangsfläche in einen Zwischenraum zwischen dem Rechts/Links-Paar der Einlagestabvorsprünge (63) eingesetzt ist, und wobei die antreibenden Klauenelemente (31) des Antriebskettenrads (3) konfiguriert sind, um in Eingriff mit den ausgesparten Eingreifabschnitten (62) zu kommen, die im Raupenband (6) mit einem vorbestimmten Intervall auf einem Außenumfang des scheibenförmigen Elementes (30) ausgebildet sind.

2. Raupenfahrgerät (2) nach Anspruch 1, wobei ein Vorne/Hinten-Paar von Druckaufnahme-Blockabschnitten (66) hinüber über einen Außenumfang des Einlagestabs (16) vorgesehen sind und weiter ins Innere des Raupenfahrgeräts (2) als eine Innenumfangsfläche des Einlagestabs (61) vorragen, um einen Zwischenraum zwischen einer Außenumfangskante des Leitrads (4) und der Innenumfangsfläche des Einlagestabs (61) zu erzeugen, wobei die Außenumfangskante des Leitrads (4) in Kontakt mit einem Innenumfang eines jeden der Druckaufnahme-Blockabschnitte (66) ist.

3. Raupenfahrgerät (2) nach Anspruch 1 oder 2, wobei
die Anti-Entgleisungsführung (7) eine am vorderen Ende befindliche Unterkante (77a) und eine bootförmige nach unten gerichtete Fläche (7B) aufweist, die jeweils auf einer Unterseite von deren Vorderabschnitt ausgebildet sind, wobei die am vorderen Ende befindliche Unterkante (77a) eine Gestalt hat, die hin zu einer vorderen Seite ansteigt, und die bootförmige nach unten gerichtete Fläche (7B) sich hin zu deren vorderem Ende verjüngt und sich hin zu einer hinteren oberen Seite weiter nach außen erstreckt; und
die Anti-Entgleisungsführung (7) eine nach oben gerichtete Fläche (7A) aufweist, die auf einer Oberseite von deren Vorderabschnitt ausgebildet ist, wobei die nach oben gerichtete Fläche (7A) eine obere Kante (79) beinhaltet, die eine Gestalt hat, welche nach hinten hin zur Rückseite ansteigt, wobei die nach oben gerichtete Fläche (7A) dachartige Gestalt hat und sich hin zu ihrem Vorderende verjüngt und hin zu ihrer hinteren Unterseite weiter nach außen erstreckt.

4. Raupenfahrgerät (2) nach einem der Ansprüche 1 bis 3, wobei die Anti-Entgleisungsführung (7) einen nach oben offenen ausgesparten Freiraum (76) aufweist, der hinter dem Abschnitt von dieser vorgesehen ist, welcher die dachartig geformte nach oben gerichtete Fläche aufweist, und ein Schlammablaufloch (76a) in einer Bodenfläche des ausgesparten Freiraums (76) ausgebildet ist, wobei das Schlammablaufloch (76a) mit dem ausgesparten Freiraum (76) in Verbindung steht.

5. Raupenfahrgerät (2) nach Anspruch 4, wobei die Anti-Entgleisungsführung (7) derart angeordnet ist, dass sich der nach oben offene, ausgesparte Freiraum (76) an einer Position befindet, die mit dem Gleiskettenrad (5) überlappt, und zwar von einer Seite des Raupenfahrgeräts gesehen.

6. Raupenfahrgerät (2) nach einem der Ansprüche 1 bis 5, das weiter einen Gleiskettenrahmen (20) aufweist, wobei die Anti-Entgleisungsführung (7) einen Befestigungsabschnitt (72) beinhaltet, der für deren Befestigung an dem Gleiskettenrahmen (20) dient; und
wobei die Anti-Entgleisungsführung (7) eine nach oben gerichtete Fläche (7A) aufweist, die auf einer Oberseite von deren Vorderabschnitt ausgebildet ist, wobei die nach oben gerichtete Fläche (7A) eine Oberkante (79) beinhaltet, die eine Gestalt hat, welche nach hinten hin zur hinteren Seite ansteigt, wobei ein hinteres Ende der oberen Kante (79) mit dem Befestigungsabschnitt (72) verbunden ist.

7. Raupenfahrgerät (2) nach einem der Ansprüche 1 bis 6, wobei der Annäherungsbegrenzungsabschnitt (A) der Anti-Entgleisungsführung (7) aus Abschnitten der gegenüberliegenden Seitenflächen (B, B) besteht, die eine sich nach unten verjüngende Neigung der Anti-Entgleisungsführung (7) aufweisen und die mit Kontaktabschnitten oberhalb von Führungsflächen (C, C) der Einlagestabvorsprünge (63) in Kontakt kommen, und der Neigungswinkel der gegenüberliegenden Seitenflächen (B, B) als ein Verjüngungswinkel mit einem geringfügig größeren Winkel als ein Verjüngungswinkel festgelegt ist, der die Neigung der Führungsflächen (C, C) der rechten und linken Einlagestabvorsprünge (63) bildet.

## Revendications

1. Appareil de déplacement à chenilles (2) comprenant :
une bande de chenille (6), la bande de chenille (6) incluant un corps de bande (60) réalisé en un matériau de caoutchouc et des barres creuses (61) incorporées dans la bande de chenille (6) à un pas prédéterminé le long d'une direction de la circonférence de la bande, chacune des barres creuses (61) ayant une paire de protubérances de barre creuse de guidage de roue porteuse gauche/droite (63), chacune des protubérances de barre creuse (63) faisant saillie à partir d'une portion intermédiaire de la barre creuse (61) dans une direction de la largeur de la bande vers une face de circonférence interne de la bande de chenille (6) ;
un barbotin (3) destiné à doter la bande de chenille (6) d'une force d'entraînement en rotation le long de la direction de circonférence de la bande ;
une roue folle (4) destinée à guider la face de circonférence interne de la bande de chenille (6) ; et
une roue porteuse (5) ;
la bande de chenille (6) ayant une face d'alignement de roue porteuse (64) formée sur une portion d'une face de circonférence interne du corps de bande (60) située latéralement à l'extérieur de la protubérance de barre creuse droite/gauche (63) de la bande de chenille (6), pour permettre le roulement de la roue porteuse (5) sur la face d'alignement de roue porteuse (64) ;
dans lequel un guide anti-déraillement (7) est ménagé entre la paire droite/gauche des protubérances de barre creuse (63) pour empêcher un déraillement de la bande de chenille (6) ; et
dans lequel le guide anti-déraillement (7) a une portion de restriction de proximité (A) formée sur celui-ci, la portion de restriction de proximité (A) étant configurée pour venir en contact avec les protubérances de barre creuse droite/gauche (63) pour empêcher un bord inférieur du guide anti-déraillement (7) de venir en contact avec la face de circonférence interne de la bande de chenille (6),
**caractérisé en ce que** le barbotin (3) comprend des organes de cliquet d'entraînement (31) ;
la bande de chenille (6) a des portions évidées d'enclenchement (62) ménagées sur une face de circonférence interne de celle-ci pour venir s'enclencher avec les organes de cliquet d'entraînement (31), chacune des portions évidées d'enclenchement (62) étant située entre une paire avant/arrière des barres creuses (61) dans la direction de la circonférence de la bande et formée allongée le long de la direction de la largeur de la bande, et des portions de bloc récepteur de pression (66) constituées de caoutchouc étant intercalées entre la paire avant/arrière respective des barres creuses (61) dans la direction de la circonférence de la bande ;
dans lequel le barbotin (3) comprend en outre un organe en forme de disque (30) ayant une circonférence externe de celui-ci ajustée dans un espace entre la paire droite/gauche des protubérances de barre creuse (63), et dans lequel les organes de cliquet d'entraînement (31) du barbotin (3) sont configurés pour venir s'enclencher avec les portions évidées d'enclenchement (62) qui sont formées dans la bande de chenille (6) avec un intervalle prédéterminé sur une circonférence externe de l'organe en forme de disque (30).

2. Appareil de déplacement à chenilles (2) selon la revendication 1, dans lequel une paire avant/arrière de portions de bloc récepteur de pression (66) est ménagée sur une circonférence externe de la barre creuse (61) et fait saillie davantage vers l'intérieur de l'appareil de déplacement à chenilles (2) qu'une face périphérique interne de la barre creuse (61), pour former un écartement entre un bord de circonférence externe de la roue folle (4) et la face périphérique interne de la barre creuse (61), le bord de circonférence externe de la roue folle (4) étant en contact avec une périphérie interne de chacune des portions de bloc récepteur de pression (66).

3. Appareil de déplacement à chenilles (2) selon la revendication 1 ou 2, dans lequel
le guide anti-déraillement (7) a un bord inférieur d'extrémité avant (77a) et une face orientée vers le bas en forme de bateau (7B) respectivement formés sur une face inférieure d'une portion avant de celui-ci, le bord inférieur d'extrémité avant (77a) ayant une forme qui s'élève vers un côté avant et la face orientée vers le bas en forme de bateau (7B) s'effilant vers une extrémité avant de celui-ci et s'étend plus large vers l'extérieur vers un côté supérieur arrière ; et
le guide anti-déraillement (7) a une face orientée vers le haut (7A) formée sur une face supérieure de la portion avant de celui-ci, la face orientée vers le haut (7A) comprenant un bord supérieur (79) ayant une forme qui s'élève en arrière vers le côté arrière, dans lequel la face orientée vers le haut (7A) a une forme de toit qui s'effile vers une extrémité avant de celui-ci et s'étend plus large vers l'extérieur vers un côté inférieur arrière de celui-ci.

4. Appareil de déplacement à chenilles (2) selon l'une quelconque des revendications 1 à 3, dans lequel le guide anti-déraillement (7) a un espace évidé ouvert vers le haut (76) ménagé en arrière de la portion de celui-ci ayant la face orientée vers le haut en forme de toit, et un trou d'évacuation de boue (76a) formé dans une face inférieure de l'espace évidé (76), le trou d'évacuation de boue (76a) communiquant avec l'espace évidé (76).

5. Appareil de déplacement à chenilles (2) selon la revendication 4, dans lequel le guide anti-déraillement (7) est disposé de sorte que l'espace évidé ouvert vers le haut (76) soit situé au niveau d'une position en chevauchement avec la roue porteuse (5) vue depuis un côté latéral de l'appareil de déplacement à chenilles.

6. Appareil de déplacement à chenilles (2) selon l'une quelconque des revendications 1 à 5, comprenant en outre un train de chenille (20), dans lequel le guide anti-déraillement (7) comprend une portion de fixation (72) destinée à sa fixation au train de chenille (20) ; et
dans lequel le guide anti-déraillement (7) a une face orientée vers le haut (7A) formée sur une face supérieure de la portion avant de celui-ci, la face orientée vers le haut (7A) comprenant un bord supérieur (79) ayant une forme qui s'élève en arrière vers le côté arrière, et une extrémité arrière du bord supérieur (79) étant raccordée à la portion de fixation (72).

7. Appareil de déplacement à chenilles (2) selon l'une quelconque des revendications 1 à 6, dans lequel la portion de restriction de proximité (A) du guide anti-déraillement (7) est constituée de portions des faces latérales opposées (B, B) ayant une inclinaison effilée vers le bas du guide anti-déraillement (7), qui viennent en contact avec des portions de contact vers le haut par rapport à des faces de guidage (C, C) des protubérances de barre creuse (63), et l'angle d'inclinaison des faces latérales opposées (B, B) est fixé comme un angle d'effilement avec un angle légèrement supérieur à un angle d'effilement qui forme l'inclinaison des faces de guidage (C, C) des protubérances de barre creuse droite et gauche (63).
